# EUROPEAN PATENT APPLICATION

(11) **EP 1 604 902 A1**
(43) Date of publication of application: **14.12.2005**
(21) Application number: 04717851.2
(22) Date of filing: 05.03.2004
(51) Int. Cl.: B65D 1/00

(54) **MULTILAYERED CONTAINER**

(30) Priority: 07.03.2003 JP 2003061874
(71) Applicant: The Nippon Synthetic Chemical Industry Co., Ltd., Osaka-shi, Osaka 531-6029 (JP)
(72) Inventor: INOUE, Kaoru, The Nippon Syn. Chemical Ind Co Ltd, Ibaraki-shi, Osaka 567-0052 (JP); NINOMIYA, Kenji, The Nippon S. ChemicalInd Co Ltd, Kurashiki-shi, Okayama 712-8052 (JP)
(74) Representative: TBK-Patent
(86) International application number: PCT/JP2004/002846
(87) International publication number: WO 2004/078606

(57) **Abstract**

The present invention provides a multilayer container excellent in shape stability of hot water resistance and transparency and particularly useful for a retort sterilization treatment and a boil sterilization treatment. It is preferable embodiment that the multilayer container of the present invention comprises a multilayer structure containing a layer having a hydrolyzed ethylene-vinyl acetate copolymer, and an irradiated treatment with the ionizing radiation of 1 to 50 kGy is conducted, and further, the layer having a hydrolyzed ethylene-vinyl acetate copolymer contains at least two kinds of hydrolyzed ethylene-vinyl acetate copolymers.

## Description

### TECHNICAL FIELD

The present invention relates to a multilayer container comprising a layer containing an hydrolyzed ethylene-vinyl acetate copolymer (hereinafter, referred to as EVOH in abbreviation). More specifically, the present invention relates to a multilayer container excellent in shape stability and transparency at pressurized hot water treatment.

### BACKGROUND ART

In general, EVOH is excellent in properties such as transparency, gas barrier properties, aroma retention properties, solvent resistance, oil resistance, and used for various packaging materials such as a food packaging material, a pharmaceutical packaging material, an industrial chemical packaging material and a pesticide packaging material, making the most of these characteristics. In particular, when containers are produced, the EVOH is often treated with heating and drawing and drawing performance is important requisite performance.

As countermeasures, processes such as a process of adding a plasticizer to EVOH (for example, refer to Japanese Unexamined Patent Publication No. 53-88067 and No. 59-20345), a process of blending a polyamide resin (for example, refer to Japanese Unexamined Patent Publication Nos. 52-141785 and 58-36412) are proposed. Further, on the other hand, there is also proposed a process of using a resin composition using together with EVOH of a low glass transition temperature having comparatively good drawing performance and (for example, refer to Japanese Unexamined Patent Publication No. 61-4752, No. 60-173038, No.63-196645, No. 63-230757, No. 63-264656 and No. 2-261847). Further, the improvement of heat drawing properties at a low temperature is also studied by adding an ethylene-(meth)acrylic acid copolymer to EVOH (for example, refer to Japanese Unexamined Patent Publication No. 11-099594).

However, the pressurized hot water treatment for sterilization is occasionally carried out after filling the content in the packaging use such as foods, and the pressurized hot water resistance of a container, particularly, shape stability of a container are also required. Also, a multilayer structure is often used in the packaging use, and for example, when a cup and a tray for retort are molded from a multilayer sheet comprising EVOH, polypropylene and polystyrene, the cup and the tray are desired to have high transparency after retort so that the content can be confirmed.

When the above-mentioned blend article was studied from the viewpoint as above, it was revealed that there is room for improvement in shape stability of a container at pressurized hot water treatment and transparency after retort treatment at being used as a multilayer structure.

### DISCLOSURE OF INVENTION

Herein, the present inventors have intensively carried out studies considering the above-mentioned circumstances, and as a result, have found that a multilayer container comprising a multilayer structure including a layer containing EVOH, which is irradiated with ionizing radiation of 1 to 50 kGy coincides with the above-mentioned objects and reaches completion of the present invention.

In the present invention, in particular, when at least two EVOHs are used as the EVOH, effects of the present invention can be more remarkably obtained.

### BEST MODE FOR CARRYING OUT THE INVENTION

Hereinafter, the present invention is explained in detail.

EVOH used for the multilayer container of the present invention is not particularly limited, but those in which an amount of ethylene is 5 to 60 % by mol, further 23 to 58 % by mol, and particularly, 25 to 55 % by mol and the hydrolysis degree of a vinyl acetate component is at least 90 % by mol, and further at least 95 % by mol is preferably used. When the amount of ethylene is less than 5 % by mol, gas barrier properties at a high humidity and melt moldability decrease, and adversely, when the amount of ethylene is more than 70 % by mol, sufficient gas barrier properties are not obtained. Further, when the hydrolysis degree of a vinyl acetate component is less than 90 % by mol, it is not preferable since gas barrier properties, thermal stability, moisture resistance and the like are lowered.

Also, the melt flow rate (MFR) (210°C, load: 2160 g) of the EVOH is not particularly limited, but the MFP of the EVOH is preferably 0.1 to 100 g/10 min, more preferably 0.5 to 50 g/10 min, and particularly preferably 1 to 30 g/10 min. When the melt flow rate is less than the ranges, the inside of an extruder becomes in a high torque condition and extrusion process tends to be difficult at molding. When the MFR of the EVOH is larger than the ranges, it is not preferable since there is possibility of lowering appearances and gas barrier properties at heat drawing molding.

The EVOH is obtained by hydrolysis of an ethylene-vinyl acetate copolymer. The ethylene-vinyl acetate copolymer is prepared by known arbitrary polymerization processes, such as solution polymerization, suspension polymerization, emulsion polymerization, and hydrolysis of the ethylene-vinyl acetate copolymer can be carried out by known processes.

The above-mentioned hydrolyzed ethylene-vinyl acetate copolymer may be copolymerized with a copolymerizable ethylenically unsaturated monomer within a range which does not inhibit the effect of the present invention. Examples of the monomer are: olefins such as propylene, 1-butene and isobutene; unsaturated acids or salts thereof or mono or dialkyl esters having 1 to 18 of carbon atoms such as acrylic acid, (meth)acrylic acid, crotonic acid, phthalic acid (and its anhydride), maleic acid (and its anhydride) and itaconic acid (and its anhydride); acrylamides such as acrylamide, N-alkylacrylamide having 1 to 18 carbon atoms, N,N-dimethylacrylamide, 2-acrylamide-propane sulfonic acid or a salt thereof, and acrylamide-propyldimethylamine or a salt thereof or a quaternary salt thereof; methacrylamides such as methacrylamide, N-alkylmethacrylamide having 1 to 18 of carbon atoms, N,N-dimethylmethacrylamide, 2-methacrylamide-propane sulfonic acid or a salt thereof, and methacrylamide-propyldimethylamine or a salt thereof or a quaternary salt thereof; N-vinyl amides such as N-vinyl-pyrrolidone, N-vinyl-formamide and N-vinyl-acetamide; vinyl cyanides such as acrylonitrile and methacrylonitrile; vinyl ethers such as alkyl vinyl ether having 1 to 18 of carbon atoms, hydroxyalkyl vinyl ether and alkoxyalkyl vinyl ether; halogenated vinyls such as vinyl chloride, vinylidene chloride, vinyl fluoride, vinylidene fluoride and vinyl bromide; vinyl silanes such as trimetoxy vinyl silane; allyl acetate, allyl chloride, allyl alcohol, dimethylallyl alcohol, trimethyl-(3-acrylamide-3-dimethylptopyl)-ammonium chloride, acrylamide-2-methylpropane sulfonic acid. Also, post modification such as urethanation, acetalization and cyanoethylation may be carried out within a range not impairing objects of the present invention.

Also, in the present invention, it is preferable since functional effects of the present invention can be more remarkably obtained by using the blend (EVOH blended products) of two of EVOHs having different glass transition temperatures (Tg) than solely using the EVOH. For example, when EVOH (A) and EVOH (B) are blended to be used, it is preferable to use EVOH (A) having a Tg of 20 to 45°C and further 30 to 40°C and EVOH (B) having a Tg of 55 to 75°C and further 60 to 70°C. When Tg of EVOH (A) is less than 20°C, the appearance of a multilayer container tends to be lowered since the compatibility of EVOH (A) with EVOH (B) is likely lowered. On the other hand, when Tg is more than 45°C, it is not preferable since the secondary moldability becomes poor and when they are molded to a tray and a cup, appearance becomes bad. When Tg of EVOH (B) is less than 55°C, it is not preferable since the gas barrier of the obtained multilayer container is lowered and, on the other hand, when Tg exceeds 75°C, it is not preferable since the appearance of the obtained multilayer container tends to be lowered.

The process of adjusting Tg of EVOH as described above is not particularly limited, but examples thereof are 1) a process of adjusting the copolymerization ratio of ethylene at preparing EVOH, 2) a process of adjusting the condition of hydrolysis reaction at preparing EVOH to remain an acetyl group at a fixed amount, 3) a process of re-acetizing EVOH with acetic anhydride and the like, 4) a process of oxidation decomposing EVOH with hydrogen peroxide and the like, 5) a process of modifying EVOH with an aliphatic carboxylic acid having about 1 to 18 of carbon atoms, its ester, its amide and the like, 6) a process of compounding a polyvalent alcohol (such as polyglycerin, trimethylol propane, sorbitol, pentaerythrytol) with EVOH. For example, in order to lower Tg, in the process 1), the copolymerization ratio of ethylene should be enlarged, and in the process 2), many acetyl groups should be remained, and further, Tg can be lowered by the processes 3) to 6). Among these processes, the processes 1) and 2) are preferably adopted industrially and practically.

The respective amounts of EVOH (A) and EVOH (B) of the above-mentioned EVOH blend article are not particularly limited, but the weight ratio of the amount of (A)/(B) is preferably 5/95 to 30/70 and further preferably 10/90 to 20/80. Effects of a combination use of EVOH (A) and EVOH (B) are not remarkably obtained when the weight ratio is out of the range.

A process (blending process) of obtaining the above-mentioned EVOH blend product is not particularly limited, and examples thereof are a process of dissolving each of EVOH in a solvent such as water-alcohol or dimethylsulfoxide, and mixing them in solution state, a process of mixing ethylene-vinyl acetate copolymers of each of EVOHs before hydrolysis in a condition of dissolving in an alcohol solvent such as methanol and hydrolyzing the mixture simultaneously, and a process of each of EVOHs in melting. Among these processes, a process of melt-mixing is usually adopted. This process will be specifically described; however, the present invention is not limited thereto.

Melt-mixing can be carried out by using known kneading machines such as a kneader-ruder, an extruder, a mixing roll, a Banbury mixer and a plasto mill, but it is preferable to usually use a single or twin-screw extruder for industries and it is also preferable to provide a vent suction device, a gear pump device, a screen device and the like, if necessary.

In particular, the EVOH blend product having superior quality in which thermal coloring and thermal deterioration is reduced can be obtained by providing one or more of vent holes in an extruder and suck depressurization to remove the moisture and byproducts (such as low molecular article decomposed) and by continuously supplying inert gas such as nitrogen into a hopper to prevent oxygen being mixed into the extruder.

Also, the process of feeding respective EVOHs to an extruder is not particularly limited, and examples thereof include (i) a process of preliminarily blending respective EVOHs before feeding them into the extruder (the above-mentioned melt-mixing, blend before hydrolysis, and the like), (ii) a process of dry-blending respective EVOHs and integrally feeding them into an extruder, (iii) a process of feeding one EVOH into an extruder to be melted and feeding another solid EVOH to the melted EVOH (a solid side feed method), (iv) a process of feeding one EVOH into an extruder to be melted and feeding another solid EVOH in a state of melting to the melted EVOH (a melt side feed process). Among those, the process (ii) is industrially practical from the viewpoints of convenience of the machine, the cost of a blend product and the like.

In the present invention, it is also preferable that EVOH contains further a boron compound, in particular, boric acid for further improvement in shape stability at retort treatment. It is also preferable that the amount of boric acid is 10 to 10000 ppm, further 20 to 2000 ppm, and particularly 50 to 1000 ppm converted to boron content based on EVOH. When the amount of boric acid is less than 10 ppm, containing effects thereof can not be obtained sufficiently and, on the other hand, when the amount is more than 10000 ppm, the appearance of the obtained multilayer container is lowered, thus being unfavorable.

Further, in the present invention, process stability at fusion molding can be improved by containing acids such as acetic acid and phosphoric acid and metallic salts such as an alkali metal, an alkali earth metal and a transition metal in the EVOH blend product, within a range not impairing objects of the present invention.

Examples of the metallic salt are: metallic salts of organic acids such as acetic acid, propionic acid, butyric acid, lauric acid, stearic acid, oleic acid and behenic acid of sodium, potassium, calcium, magnesium and the like; and metallic salts of inorganic acids such as sulfuric acid, sulfurous acid, carbonic acid, boric acid and phosphoric acid. Acetate, borate, phosphate and hydrogen phosphate are preferable. Further, the amount of the metallic salt is preferably 5 to 1000 ppm, further preferably 10 to 500 ppm, and particularly 20 to 300 ppm converted to metal content based on EVOH. When the amount of the metallic salt is less than 5 ppm, containing effects are not obtained sufficiently and, on the other hand, when the amount is more than 1000 ppm, it is not preferable since the appearance of the obtained multilayer container is lowered. Herein, in case of containing at least two salts of alkali metals and/or alkali earth metals in the blend product, the total amount is preferably within the range of the above-mentioned amounts.

Also, when two kinds of EVOHs are used, the above-mentioned boron compound, other acids and metal salts can be added in the same manner.

The process of containing the boron compound, other acids and metallic salts in blended compound of two kinds of EVOHs is not particularly limited, and previously containing in one EVOH, containing at the same time of blending each of EVOHs, or containing in a composition after blending each of EVOHs, or these processes can be combined. To obtain the effect of the present invention more remarkably, the process of previously containing in one EVOH is preferable from the viewpoint that dispersibility of the boron compound, acids and metal salts is excellent.

Examples of the process of previously containing the boron compound, acids and metal salts in one EVOH include (1) a of bringing EVOH having a water content rate of 20 to 80 % by weight in contact with the aqueous solution of the boron compound, acids and metal salts and containing the boron compound, acids and metal salts in it to be dried, (2) a process of containing the boron compound, other acids and metal salts in the homogeneous solution of EVOH (such as water/alcohol solution), then extruding the mixture in a coagulation liquid in a strand shape, then cutting the obtained strand as pellets and further drying the pellets, (3) a process of integrally mixing EVOH with the boron compound, other acids and metal salts and fusion-kneading the mixture with an extruder and the like, (4) a process, at preparing EVOH, of neutralizing alkali (such as sodium hydroxide, potassium hydroxide) used in a hydrolysis step with acids such as acetic acid and adjusting the amounts of residual acids such as acetic acid and alkali metallic salts, which are by-products, such as sodium acetate and potassium acetate by washing treatment. In order obtain the effects of the present invention more remarkably, the processes (1), (2) and (4) are preferable since the dispersibility of the boron compound, acids and metal salts is excellent.

In the present invention, to the above-mentioned EVOH or EVOH blend product, may be compounded lubricants such as saturated fatty acid amides (for example, stearic acid amide and the like), unsaturated fatty acid amides (for example, oleic acid amide and the like), bisfatty acid amides (for example, ethylenebisstearic acid amide and the like), metal salts of a fatty acid (for example, calcium stearate, magnesium stearate and the like), low molecular weight polyolefins (for example, a low molecular weight polyethylene or a low molecular weight polypropylene having a molecular weight of about 500 to 10000 and the like); inorganic salts (for example, hydrotalcite and the like), plasticizers (for example, aliphatic polyvalent alcohols such as ethyleneglycol, glycerin, hexanediol and the like), oxygen absorbents (for example, as inorganic oxygen absorbents, reduced iron powders further, those obtained by adding a water-absorbing substance, an electrolyte and the like thereto, aluminum powders, potassium sulfite, titanium oxide being an photocatalyst and the like; as organic compound oxygen absorbents, ascorbic acid, further its fatty acid esters and metal salts, hydroquinone, gallic acid, polyvalent phenols such as phenolaldehyde resin containing a hydroxyl group, the coordinate bonded compound of a nitrogen-containing compound with a transition metal such as bis(salicylaldehyde)iminecobalt, tetraethylenepentaminecobalt, cobalt- Shiff base complex, porphyrins, macrocyclic polyamine complexes and polyethyleneiminecobalt complex, terpene compounds, the reaction product of amino acids with a hydroxy-containing reductive substance and triphenylmethyl compounds; as polymer oxygen absorbents, the coordinate bonded compound of a nitrogen-containing resin with a transition metal (for example, a combination of MXD nylon and cobalt), the blend product of tertiary hydrogen-containing resin with a transition metal (for example, a combination of polypropylene and cobalt), the blend product of carbon-carbon unsaturated bond-containing resin with a transition metal (for example, a combination of polybutadiene and cobalt), photooxidation disintegrative resin (for example, polyketone), anthraquinone polymers (for example, a combination of polyvinyl anthraquinone) and the like, and further, those obtained by adding a photo-initiator (such as benzophenone), a peroxide catching agent (such as a commercially available antioxidant), a deodorant (such as active carbon) to these compounding products, thermal stabilizers, photo-stabilizers, anti-oxidants, ultraviolet absorbents, colorants, antistatic agents, surfactants, antibiotics, antiblocking agents, slipping agents, fillers (for example, inorganic fillers), other resins (for example, polyolefin, polyamide) and the like, within a range not impairing objects of the present invention.

When the multilayer container of the present invention is obtained, a multilayer film or a sheet (collectively described as a multilayer sheet) having a layer of the above-mentioned EVOH or EVOH blend product (collectively described as an EVOH composition) is produced, and then the obtained multilayer sheet is often molded into containers. Such processes will be specifically explained.

When the multilayer sheet is prepared, other substrate (such as thermoplastic resin) is laminated on one side or both sides of the layer of the EVOH composition. Examples of the lamination process are a process of melt-extruding and laminating other substrate on the film or the sheet of the EVOH composition, adversely, a process of melt-extruding and laminating the film or the sheet of the EVOH composition on other substrate, a process of co-extruding the EVOH composition and other substrate, a process of dry-laminating the film or the sheet of the EVOH composition with the film or the sheet of an other substrate using known adhesives such as an organic titanium compound, an isocyanate compound, a polyester compound and a polyurethane compound. The temperature of melt molding at the time of above-mentioned melt-extrusion lamination and co-extrusion is often selected from a range of 150 to 300°C.

As other substrate, a thermoplastic resin is useful and, specifically, examples are polyolefin resins in broad definition such as: homopolymer or copolymers of an olefin such as a linear low density polyethylene, a low density polyethylene, an ultra low density polyethylene, a middle density polyethylene, a high density polyethylene, an ethylene-vinyl acetate copolymer, an ionomer, an ethylene-propylene (random or block) copolymer, an ethylene-acrylic acid copolymer, an ethylene-acrylic acid ester copolymer, a polypropylene, a propylene-α-olefin copolymer (α-olefin having 4 to 20 carbons), a polybutene and a polypentene, or such as those obtained by graft-modifying homopolymer or copolymers of an olefin with unsaturated carboxylic acid or its ester, a polyester resin, a polyamide resin (copolymerized polyamide is also included), a polyvinyl chloride, a polyvinylidene chloride, an acrylic resin, a polystyrene, a vinyl ester base resin, a polyester elastomer, a polyurethane elastomer, a chlorinated polyethylene, a chlorinated polypropylene, an aromatic or aliphatic polyketone, further, polyalcohols obtained by reducing these, further, other EVOH. A polypropylene, an ethylene-propylene (random or block) copolymer, a polyamide, a polyethylene, an ethylene-vinyl acetate copolymer, a polystyrene, a polyethylene terephthalate (PET) and a polyethylene naphthalate (PEN) are preferably used from the viewpoint of practical utility such as physical properties (especially, strength) of the laminate.

Further, when a molded product made of the film or sheet of the EVOH composition is extrusion-laminated on other substrate and a molded product made of the film or sheet of the EVOH composition is dry-laminated with the film or sheet of other substrate using an adhesive, an arbitrary substrate (such as paper, metal foil, uniaxial or biaxial drawing plastic film or sheet and inorganic deposited article thereof, woven fabric, non-woven fabric, metallic cotton, wood) can be used in addition to the thermoplastic resin.

When the layer of the EVOH composition is referred to as a (a₁, a₂, ...) and other substrate, for example, the layer of a thermoplastic resin is referred to as b (b₁, b₂, ...), the layer structure of the multilayer sheet can be not only a two layer structure of a/b, but also arbitrary combinations such as b/a/b, a/b/a, a₁/a₂/b, a/b₁/b₂, b₂/b₁/a/b₁/b₂ and b₂/b₁/a/b₁/a/b₁/b₂. Here, when a regrind layer comprising at least the EVOH composition and a thermoplastic resin is regarded as R, the layer structure of the multilayer sheet can be also b/R/a, b/R/a/b, b/R/a/R/b, b/a/R/a/b, b/R/a/R/a/R/b and the like. Further, in the above-mentioned layer structure, an adhesive resin layer can be provided between respective layers, if necessary. As the adhesive resin layer, various adhesive resin layers can be used and they are preferable in a viewpoint that a laminate excellent in drawing properties is obtained. Although it is not necessarily appropriate to give an example, depending on a kind of b resins, but examples of the adhesive resin are a modified olefin copolymer containing a carboxyl group which is obtained by chemically bonding an unsaturated carboxylic acid or its anhydride with the olefin copolymer (the above-mentioned olefin copolymer in broad definition) by such as addition reaction, graft reaction. Specific examples are one or more than two mixtures selected from graft-modified polyethylene with maleic anhydride, graft-modified polypropylene with maleic anhydride, an graft-modified ethylene-propylene (random or block) copolymer with maleic anhydride, graft-modified ethylene-ethyl acrylate copolymer with maleic anhydride, an ethylene-vinyl acetate copolymer graft-modified with maleic anhydride. Herein, the amount of the unsaturated carboxylic acid or its anhydride contained in the thermoplastic resin is preferably 0.001 to 3 % by weight, more preferably 0.01 to 1 % by weight, and particularly preferably 0.03 to 0.5 % by weight. When the modification amount in the modified product is small, adhesiveness can be insufficient and, on the other hand, when the amount is large, moldability can be deteriorated, thus being preferable. Further, the EVOH composition used in the present invention, other EVOH, rubber and elastomer components such as a polyisobutylene and an ethylene-propylene rubber and, further, the resin of the b layer and the like can be blended with those adhesive resins. In particular, it is useful since adhesiveness can be improved by blending a polyolefin resin which is different from the polyolefin resin being the matrix of the adhesive resin.

Although it is not appropriate to suggest the thickness of each layer of the multilayer sheet, depending on the layer structure, a kind of b, use and shape of container, demanded physical properties and the like, the thickness of the multi-layer sheet is selected from ranges in which the a layer is usually 5 to 500 µm and further 10 to 200 µm, the b layer is 10 to 5000 µm and further 30 to 1000 µm, and the adhesive resin layer is 5 to 400 µm and further 10 to 150 µm.

Further, the above-mentioned substrate (layer) of the multilayer sheet may contain an antioxidant, an antistatic agent, a lubricant, a nucleus agent, an anti-blocking agent, an ultraviolet ray absorbent, a wax and the like which are conventionally known within a range not impairing objects of the present invention.

Then, the multilayer sheet obtained in the above-description is molded into containers. processes such as vacuum, pressure or vacuum and pressure molding are carried out for the molding. Herein, a process of molding in a mold shape further using a plug in combination, if necessary, (such as a straight process, drape process, air slip process, snap back process, plug assist process)are adopted. The various molding conditions of the molding temperature, the degree of vacuum, the pressure of a pressure or molding speed can be suitably set by a plug shape, mold shape or the nature of a raw material sheet. At the molding, usually, a temperature at which the resin in the multilayer sheet is sufficiently softened is good. Since the preparation of containers can be carried out by thermal molding at low temperature, specifically, at a molding temperature of 80 to 160°C and more preferably 100 to 140°C, even when resins such as polypropylene and polystyrene are compounded in the multilayer sheet, it is one of characteristics of the present invention that the transparency of containers can be enhanced.

The multilayer sheet is molded into containers such as cups and trays by the above-mentioned molding.

The present invention is characterized in that an ionizing radiation of 1 to 50 kGy is irradiated on the containers obtained in the above-description. Examples of the ionizing radiation are α-ray, β-ray, γ-ray, X-ray, electron beam, neutron radiation, and γ-ray and electron beam are used from the viewpoint of easiness of treatment, and γ-ray is preferably used from the viewpoint of irradiation efficiency.

The γ-ray is not particularly limited, but using the γ-ray emitted from cobalt 60 and cesium 137 is preferable.

It is preferable that the radiation dosage of the ionizing radiation is 1 to 50 kGy, further 5 to 40 kGy and particularly 15 to 30 kGy. When the radiation dosage is less than 1 kGy, it is difficult to obtain the effects of the present invention and, on the other hand, when it exceeds 50 kGy, it is not appropriate since a nasty smell deduced to be caused by the decomposition of a resin is generated.

Timing of irradiating the ionizing radiation is, of course, right after molding into containers such as cups, trays and bags, and may be irradiated after preserving containers for a fixed period of time. Also, the ionizing radiation may be irradiated in a condition of which contents are filled in the containers.

Thus, the multilayer container of the present invention is obtained. The multilayer container of the present invention is also useful as various containers for mayonnaise, seasoning agents such as dressing, fermented foods such as soybean paste, cosmetics, pharmaceuticals, detergents, perfumeries, industrial chemicals, pesticides, fuels in addition to general foods and processed (cooked) foods, and the present invention can be preferably employed for containers provided for retort sterilization treatment and boil sterilization treatment in particular.

Also, known treatment processes by heating with hot water and conditions can be adopted for the retort sterilization treatment and the boil sterilization treatment. The retort sterilization treatment adopt a process such as recovery type, replacement type, vapor type, shower type, spray type.

Hereinafter, the present invention is described in detail based on Examples.

Further, "parts" and "%" in the examples refer to basis on weight unless otherwise noticed.

The measurement of Tg of EVOH was carried out by measuring at a temperature raising rate of 10°C/min by using a differential scanning calorie meter ("DSC-7" made by Perkin Elmer).

The measurement of the amount of boric acid in EVOH was carried out by alkali fusion of EVOH and quantitative determination of boron by ICP emission spectral analysis.

Further, the following EVOHs were prepared.
EVOH-1: The amount of an ethylene of 52 % by mol, a hydrolysis degree of 97.0 % by mol, MFR of 20 g/10 min, Tg of 40°C, and boric acid powder is not compounded.
EVOH-2: The amount of ethylene of 32 % by mol, a hydrolysis degree of 99.5 % by mol, MFR of 3.5 g/10 min, Tg of 61 °C, and boric acid powder is compounded (the amount is 100 ppm converted to boron content).
EVOH-3: The amount of ethylene of 32 % by mol, a hydrolysis degree of 99.5 % by mol, MFR of 3.2 g/10 min, Tg of 62°C, and boric acid powder is not compounded.

### EXAMPLE 1

After 15 parts of the above-mentioned EVOH-1 (A) and 85 parts of EVOH-2 (B) were dry-blended, the mixture was provided for a twin-screw extruder equipped with a strand die, melt-extrusion was conducted under conditions below, and the strands were cut with a pelletizer to obtain the aimed EVOH composition (pellets).

### (Condition of fusion-pelletization by twin-screw extruder)

Inner diameter of screw: 30 mm (L/D = 42)
Screw shape: Screen mesh 90/120/90 having a kneading disc of 150 mm at a compression part
Rotation number of screw: 150 rpm
Vent hole: Vacuum suction is carried out.
Inside of hopper: Nitrogen gas is provided for displacement.
Extrusion temperature:
   C1: 180°C
   C2: 200°C
   C3: 220°C
   C4: 220°C
   C5: 220°C
   C6: 220°C
   C7: 220°C
   D: 220°C

### [Preparation of multilayer container]

The EVOH composition (pellets) obtained in the above-description was provided for a multilayer extruding device equipped with a multilayer T-die having a feed block to extrude three kinds of resin for five layers, to obtain a multilayer sheet of polypropylene ("NOVATEC PP EA9" available from Mitsubishi Chemical Corporation) layer/adhesive resin ("MODIC AP F502" available from Mitsubishi Chemical Corporation) layer/EVOH composition layer/adhesive resin layer (same as above) / polypropylene layer (same as left) having a layer composition (thickness: 450/90/120/90/450 µm), then the sheet was heated at a heater temperature of 500°C for 50 seconds with a plug assist type vacuum and pressure molding machine (made by Asano Laboratorics), and heat drawing molding process was conducted at a molding temperature of 135°C to prepare a multilayer container (a cup with an upper face of 65 mmΦ, a bottom face of 60 mmΦ and a depth of 55 mm).

### [γ-ray irradiation treatment]

The γ-ray irradiation was carried out on the above-described obtained cup by a γ-ray irradiation device in which cobalt 60 was the ray source so that irradiation dosage was 25 kGy, to obtain the multilayer container (cup) of the present invention.

The obtained cup was charged with150 cc of water, its upper face was sealed by heat-seal with an O-PP film having a thickness of 100 µm, then the retort treatment at 120°C for 30 minutes was carried out by using a retort test machine made by Hisaka Works, Ltd. and shape stability of hot water resistance was evaluated as described below.

The length of each of four points (12 points in total) was measured for the diameter and depth of the upper face and bottom face before and after carrying out the above-mentioned retort treatment, and judging as below by the number of spots where the change of the dimension before and after the retort treatment was 1 mm or more.
○: 0 to 2 spots
Δ: 3 to 6 spots
×: 6 to 12 spots

### (Transparency)

The haze value of the side part (a thickness of about 250 µm) of the obtained cup after the retort treatment in the above-description was measured by using a "HAZE METER NDH2000" made by Nippon Denshoku Industries Co., Ltd.

### EXAMPLE 2

The multilayer container of the present invention was obtained in the same manner as Example 1, except that the time of sheet heating at preparation of the multilayer container was 60 seconds and the molding temperature was 150°C, and the evaluation was conducted in the same manner.

### EXAMPLE 3

The multilayer container of the present invention was obtained in the same manner as Example 1, except for using only EVOH-2 (B), the evaluation was conducted in the same manner.

### EXAMPLE 4

The multilayer container of the present invention was obtained in the same manner as Example 1, except that the composition of a multilayer sheet was a layer structure (thickness: 450/90/120/90/450 µm) of polystyrene ("DIAREX HT516" available from A & M Styrene Co., Ltd.) layer/adhesive resin ("MODIC AP F502" available from Mitsubishi Chemical Corporation) layer/EVOH composition layer/adhesive resin layer (same as left) / polystyrene layer (same as above), heating time was 28 seconds, and a molding temperature was 110°C to conduct the molding of a cup, and the evaluation was conducted in the same manner.

### EXAMPLE 5

The multilayer container of the present invention was obtained in the same manner as Example 4, except for using EVOH-3 instead of EVOH-2 and the evaluation was conducted in the same manner.

### EXAMPLE 6

The multilayer container of the present invention was obtained in the same manner as Example 4, except for conducting an electron irradiation treatment described below instead of γ-ray treatment, and the evaluation was conducted in the same manner.

### (Electron irradiation treatment)

The electron irradiation was carried out to the obtained cup at an irradiation voltage of 200 kV, an irradiation dosage of 25 kGy and an oxygen concentration at irradiation of 300 ppm, using an "EYE ELECTRONBEAM" made by Iwasaki Electric Co., Ltd.

### COMPARATIVE EXAMPLE 1

In Example 1, the evaluation of the multilayer container was conducted in the same manner without carrying out the irradiation treatment of γ-ray.

### COMPARATIVE EXAMPLE 2

In Example 4, the evaluation of the multilayer container was conducted in the same manner without carrying out the irradiation treatment of γ-ray.

The evaluation results of the examples and the comparative examples are shown in Table 1.

**TABLE 1**

| | Shape stability of hot water resistance | Transparency (Haze value) |
|---|---|---|
| Ex. 1 | ○ | 15 |
| Ex. 2 | ○ | 27 |
| Ex. 3 | Δ | 18 |
| Ex. 4 | ○ | 12 |
| Ex. 5 | Δ | 15 |
| Ex. 6 | ○ | 15 |
| Com. Ex. 1 | × | 30 |
| Com. Ex. 2 | × | 23 |

### INDUSTRIAL APPLICABILITY

Since the multilayer container of the present invention contains a layer containing EVOH and is irradiated with the ionizing radiation of the specific radiation dosage, it is excellent in the shape stability of hot water resistance and transparency, useful as packaging materials of various packaging uses (such as foods, beverages, cosmetics, pharmaceuticals, industrial chemicals) and can be preferably utilized for containers provided for, particularly, the retort sterilization treatment and the boil sterilization treatment.

## Claims

1. A multilayer container, which comprises a multilayer structure containing a layer having a hydrolyzed ethylene-vinyl acetate copolymer, and which is treated with an irradiation with an ionizing radiation of 1 to 50 kGy.

2. The multilayer container of Claim 1, wherein the layer having the hydrolyzed ethylene-vinyl acetate copolymer contains at least two kinds of hydrolyzed ethylene-vinyl acetate copolymers.

3. The multilayer container of Claim 2, wherein that two kinds of the hydrolyzed ethylene-vinyl acetate copolymers comprise a hydrolyzed ethylene-vinyl acetate copolymer (A) having a glass transition temperature of 20 to 45°C and a hydrolyzed ethylene-vinyl acetate copolymer (B) having a glass transition temperature of 55 to 70°C, and the ratio of (A)/(B) is 5/95 to 30/70 (weight ratio).

4. The multilayer container of Claim 1, wherein the hydrolyzed ethylene-vinyl acetate copolymer contains a baron compound in an amount of 10 to 10000 ppm converted to boron content.

5. The multilayer container of Claim 1, which is molded at a molding temperature of 100 to 140°C by vacuum, pressure, or vacuum and pressure molding.

6. The multilayer container of Claim 1, which has the multilayer structure containing a polypropylene resin layer or a polystyrene resin layer on both sides of the layer containing the hydrolyzed ethylene-vinyl acetate copolymer.

7. The multilayer container of Claim 6, which has an adhesive resin layer between the layer containing the hydrolyzed ethylene-vinyl acetate copolymer and the polypropylene resin layer or the polystyrene resin layer.

8. The multilayer container of Claim 1, wherein a shape of the multilayer container is a cup or a tray.

9. The multilayer container of Claim 1, wherein an ionizing radiation is γ-ray.
